Europäisches Patentamt

(19) European Patent Office  (11) Publication number: **0 102 656**

Office européen des brevets  **B1**

(12) **EUROPEAN PATENT SPECIFICATION**

(45) Date of publication of patent specification: **18.06.86**  (51) Int. Cl.⁴: **A 23 D 3/00,** A 23 D 3/02,
A 23 C 20/00, A 23 L 1/19,
(21) Application number: **83201096.1**  A 23 C 19/082

(22) Date of filing: **26.07.83**

(54) Edible composition comprising discrete fat-bearing particles in a fat-bearing matrix.

(30) Priority: **28.07.82 US 402710**

(43) Date of publication of application:
**14.03.84 Bulletin 84/11**

(45) Publication of the grant of the patent:
**18.06.86 Bulletin 86/25**

(84) Designated Contracting States:
**AT BE CH DE FR GB IT LI NL SE**

(56) References cited:
**EP-A-0 056 682**
**BE-A- 488 176**
**US-A-2 330 986**
**US-A-3 647 480**

(73) Proprietor: **UNILEVER NV**
**Burgemeester s'Jacobplein 1 P.O. Box 760**
**NL-3000 DK Rotterdam (NL)**
㊸ **BE CH DE FR IT LI NL SE AT**

(73) Proprietor: **UNILEVER PLC**
**Unilever House Blackfriars P.O. Box 68**
**London EC4P 4BQ (GB)**
㊸ **GB**

(72) Inventor: **Izzo, Henry John**
**518 Golf Links Drive**
**Bridgewater New Jersey 08887 (US)**
Inventor: **McNaught, John Patrick**
**7 Christopher Place**
**Saddle River New Jersey 07458 (US)**

(74) Representative: **Léon, Alain Elie, Dr. et al**
**Unilever N.V. Patent Division P.O. Box 137**
**NL-3130 AC Vlaardingen (NL)**

Courier Press, Leamington Spa, England.

# 0 102 656

**Description**

The present invention is directed to edible fatty compositions and more specifically to compositions comprising discrete fat-bearing particles in a fat-bearing matrix.

Many fatty food products which are considered to be especially tasty and, therefore, desirable by consumers are made of expensive and mostly natural materials. Such premium materials include butter, cheese, cream cheese and sour cream.

In addition to taste, many premium ingredients have a characteristic feel in the mouth which is recognized and desired by consumers. For example, the melting of real butter in the mouth creates a characteristic cooling effect which is highly desired by consumers.

In order to reduce costs, manufacturers have provided substitute, and often synthetic, materials which are less expensive to manufacture. Such substitutes include margarine, synthetic sour cream, synthetic cream cheese and various cheese spreads. Although these substitute materials are less expensive, they do not have the desired taste or mouth feel of the premium materials.

In an attempt to combine taste and low cost, mixtures of premium ingredients and less costly ingredients have been provided. These prior art mixtures are, for the most part, homogeneous. A common example is a mixture of butter homogeneously dispersed in margarine. Such compositions do not, however, have the characteristic taste or cool melting feel of butter. Even the presence of up to 40% butter in margarine does not impart the genuine taste and mouth feel characteristics of butter to such homogeneous compositions.

Compositions containing discrete particles of fat in a fat base are also known. For example, North et al., U.S. Patent 2,997,396 to the Beatrice Food Company, disclose "a body of plastic margarine fat having uniformly dispersed therethrough discrete particles of fat encased in non-fat milk solids". This composition, however, is disadvantageous for the purposes of the present invention in that the fat particles have sizes between about 0.5 and 2.5 micrometers. Such particles would not be readily apparent to consumers.

Similarly, Cermak, U.S. Patent 3,647,480 to the S.C.M. Corporation, discloses discrete particles of a condiment attached to a fatty matrix particle for use in foodstuffs such as cakes, doughnuts, bread and the like. Such compositions would be disadvantageous for present purposes in that the fatty matrix particle has a Wiley melting point of at least 38°C. Such particles would be very hard and would impart to compositions containing them an undesirable gritty feel.

Zachariassen et al., U.S. Patent 2,605,185, also disclose compositions containing two fatty components. The compositions are prepared by heating one fat component at a temperature somewhat above its solidification point or at a temperature below the solidification point while still maintaining a liquid state. The second component is added in a liquid state to the molten or supercooled first component. The second component may be, for example, an emulsion of a fat. So produced, the Zachariassen et al. compositions would contain globules of no more than 15 micrometers and probably much less. Such globules are considerably smaller than those contemplated by the invention described and claimed below.

Commercial products containing discrete fat-bearing particles are also known. Examples include chunky peanut butter, which contains pieces of peanuts in a peanut butter base, and salad dressings containing pieces of blue cheese in a liquid oil-containing base. These compositions are disadvantageous in that the particles have a substantially different feel than the matrix. Therefore, it would be readily apparent to the consumer that a two-phase system was involved.

It is an object of the present invention to provide food compositions comprising a premium ingredient and a substitute ingredient having the taste and mouth-feel characteristics of the premium ingredient.

It is another object of the present invention to provide compositions comprising fat-bearing discrete particles in a fat-bearing matrix which avoid the disadvantages of prior art compositions.

It is a further object of the present invention to provide compositions comprising fat-bearing discrete particles in a fat-bearing matrix wherein consumers perceive the composition as having at least some taste, feel and sight characteristics of the particles.

It is an additional object of the present invention to provide a method for producing compositions comprising discrete fat-bearing particles in a fat-bearing matrix.

These and other objects of the present invention as will become apparent to one of ordinary skill in the art have been achieved by providing an edible, non-pourable plastic or semi-plastic composition comprising 0.1 to 80% by weight of discrete, fat-bearing, plastic, semi-plastic or liquid particles dispersed in a fat-bearing plastic or semi-plastic matrix, said matrix and said particles each comprising 10 to 100% by weight of fat, said particles having a size of about 0.04 mm to 4.8 mm and a Wiley melting point less than 38°C.

The present invention also relates to a method for preparing a composition comprising discrete particles containing 10 to 100% by weight of fat and having a particle size of 0.04 to 4.8 mm in a margarine matrix, comprising the steps of introducing 0.1 to 80% by weight of said particles into said matrix at a temperature below the melting point of the particles while the matrix is in a liquid supercooled state; and cooling the composition.

It has now been discovered that compositions comprising a premium food ingredient and a substitute food ingredient can be made to assume the characteristics of the premium ingredient to an unexpected

2

**0 102 656**

extent. This is achieved when the premium ingredient is present as discrete particles in a matrix of the substitute ingredient. This is especially true when the discrete particles are visible.

It is not entirely certain why this is the case, and the present claims are not limited in anyway to a particular theory. It is believed, however, that the taste buds on the tongue sense whatever flavour elements they come in contact with at the concentration of those flavour elements in the specific contact area. When the taste buds sense the particles of the premium ingredient, messages are sent to the brain from the mouth that the premium ingredient is present in a concentration higher than it really is.

The brain is, in a way, deceived into perceiving that the premium ingredient is relatively pure. This deception would be lost where the particles have a significantly different feel from that of the matrix. For example, the feel of peanuts in a peanut butter matrix or of blue cheese particles in a liquid oil matrix does not give the sensation of eating peanuts or blue cheese.

In the present invention, the particles and the matrix have substantially the same feel since the particles are liquid, plastic or semi-plastic and the matrix is plastic or semi-plastic. It is especially preferred that the particles be plastic or semi-plastic.

The taste deception described above would also not occur when the premium ingredient and the substitute ingredient are present in a homogeneous composition. In such compositions, the brain merely receives a message from the taste buds that the sensed composition contains a premium ingredient diluted in a substitute ingredient.

The role that psychology plays in this effect is not certain but should not be underestimated. It is believed that the perception of the premium ingredient is enhanced when the consumer is able to see that the composition contains the premium ingredient. In this way, the consumer is alerted to, and expects, the taste and feel of the premium ingredient.

The present compositions are edible compositions which may be used alone or in combination with any food product where fat is desirable. Such foods include, for example, pastries, crackers, rolls, breads, muffins, cookies and the like. In fact, any food which advantageously contains unmelted fat may benefit from the invention claimed herein.

As the fat-bearing particles of the claimed compositions are usually more costly than the matrix into which they are placed, it is advantageous for economic reasons to use as little of the fat-bearing particles as possible. The lower limit is set by that amount which is visually and/or organoleptically perceptible to the consumer. The compositions of this invention generally contain at least 0.1% by weight, preferably 2% by weight, and most preferably 5% by weight of the fat-bearing particles in a matrix. (All percentages in the specification and claims are by weight unless otherwise indicated.)

The maximum amount of particles in the matrix is determined by economic factors and the ability conveniently to disperse the particles in the matrix. Generally, larger amounts of the fat-bearing particles lead to a greater perception of the particles by the consumer. The maximum amount of the fat-bearing particles in the claimed compositions is 80% by weight, preferably 60% by weight, and most preferably 40% by weight.

Particles suitable for use in the claimed compositions contain 10 to 100% by weight, preferably 30 to 97.5% by weight, and most preferably 65 to 85% by weight of fat. The fat may suitably comprise any edible fatty acid triglyceride. The fatty acids which are present in the triglyceride may be unsaturated or saturated and will generally contain a mixture of unsaturated and saturated fatty acids. Some suitable unsaturated fatty acids include oleic acid, palmitoleic acid, linoleic acid and linolenic acid. Some suitable saturated fatty acids include butyric acid, capric acid, caprylic acid, lauric acid, myristic acid, palmitic acid and stearic acid.

In addition to the fat, the particles of the claimed compositions generally also include 0 to 90% by weight, preferably 2.5 to 70% by weight and most preferably 15 to 35% by weight of water. Optional ingredients such as colouring agents, preservatives, antioxidants, vitamins and flavours may also be present. Some suitable colouring agents include beta carotene, annato, carrot oil and tumeric. Some suitable preservatives and antioxidants include BHA, propyl gallate, TBHQ, EDTA, citric acid, sodium benzoate, potassium sorbate and mixtures thereof. Some suitable vitamins include vitamin D and vitamin A. These optional ingredients generally do not affect the essential character of the particle.

The particles may be of natural or unnatural materials. Since natural materials enhance consumer acceptance of food products, the particles of the present invention preferably consist essentially of natural materials. Some sources of natural materials suitable for use in the particles include butter, sour cream, cream cheese and the like. Cheeses such as Cheddar cheese, blue cheese, Brie, Muenster, Gouda and the like also provide suitable sources of natural materials for use in the particles.

The preferred natural materials are butter and butter oil. Butter, which is especially preferred, is a milk fat product which contains not less than 80% milk fat, 17.5 to 19.5% water and 0.4 to 1.0% non-fat milk solids. It is important to distinguish butter from butter oil, which is obtained by melting butter and removing the separated water and non-fat milk solids.

Other natural products suitable for use in the present compositions are cream cheese, other cheeses, cheese products, cheese spreads and sour cream. According to U.S. Food and Drug Administration (FDA) standards, cream cheese contains not less than 33% milk fat, not less than 22% non-fat milk solids, and not more than 55% water. Under the same FDA standards, sour cream contains not less than 14.4% milk fat. Similarly, a composition must contain at least 23% fat, 33% non-fat milk solids and no more than 44% water to qualify as a cheese product and at least 20% fat and more than 44% but no more than 60% water

3

to qualify as a processed cheese spread according to the FDA. These FDA standards do not apply to synthetic (i.e. artificial) cream cheese, cheese, sour cream, cheese products and cheese spreads.

The size of the particles used in the claimed compositions is critical to the present invention. For example, in compositions comprising butter particles in margarine, the margarine generally melts sooner, and is, therefore, perceived earlier than the butter. The timing of the melting of the butter is affected by the particle size since smaller particles melt more rapidly than larger particles. Thus, the smaller the particle size of the butter, the earlier the taste sensation of butter is received by the brain of the consumer. With larger particles, the taste sensation occurs somewhat later, but lasts for a longer duration of time. The advantages of both the small and large particle sizes may be obtained by using particles with a fairly large range of sizes.

The minimum particle size is that which can be produced by available equipment and is perceptible to consumers. Some minimum sizes for use in the particles of the invention include 0.04 mm, preferably 0.07 mm and most preferably 0.18 mm.

The maximum size of the particles suitable for use in the claimed compositions is that which can conveniently be placed into the matrix and which imparts to the matrix the characteristics of the ingredients of the particles. Some suitable maximum sizes include 4.8 mm, preferably 2.4 mm and most preferably 1.0 mm.

It may be desirable or undesirable for the particles to be visible in the matrix. Visibility depends to some extent on the particle size and on the contrast in colour between the particles and the matrix.

The particles are limited to those physical states which are not perceptively different from the plastic or semi-plastic matrix. Accordingly, the particles can be, for example, plastic, semi-plastic or liquid and are preferably plastic or semi-plastic. The particles may also be a mixture of two or more physical states.

In order to impart a desirable feel to the composition, the particles should have melting points sufficiently low so that the portion of the particles not already melted at room temperature melts in the consumer's mouth. Thus, the fat in the particles of the invention should have Wiley melting points of no more than 38°C, preferably 32°C and most preferably 30°C. It is preferable that the melting point of the particles be lower than that of the matrix in order that the taste of the particle last longer than that of the matrix.

The particles described above are dispersed in a matrix as described below. Preferably, the particles are dispersed substantially homogeneously in the matrix.

The claimed compositions generally comprise 20 to 99.9% by weight, preferably 40 to 90% by weight and most preferably 60 to 80% by weight of a fat-bearing matrix. The matrix generally comprises 10 to 100% by weight, preferably 40 to 85% by weight and most preferably 60 to 80% by weight of fat.

Fats suitable for use in the matrix may be any fatty acid triglyceride. The matrix will generally contain a mixture of triglycerides. The triglycerides may comprise unsaturated or saturated fatty acids. Some suitable unsaturated fatty acids include oleic acid, linoleic, linolenic and palmitoleic acid. Some suitable saturated fatty acids include capric acid, caprylic acid, lauric acid, myristic acid, palmitic acid and stearic acid.

The matrix may comprise natural or synthetic (i.e. artificial) fatty materials. Some suitable matrices include margarine, fatty spreads, butter, synthetic or natural cream cheese, synthetic or natural sour cream, and synthetic or natural cheese spreads.

In order to constitute a margarine, a fatty composition must have at least 80% fat, although it may have as much as 100% fat. Fatty spreads may contain as little as 20% fat.

The margarines or fatty spreads suitable for use as the matrix in the presently claimed compositions may comprise any one or more of the well-known edible oils commonly used for this purpose. Some suitable oils include fish oil, beef tallow, rapeseed oil, cottonseed oil, soybean oil, lard, coconut oil, palm kernel oil, sunflower oil, palm oil, safflower oil, corn oil and the like. The oils, some or all of which may be hydrogenated, are present in amounts of 20 to 100% by weight, preferably 20 to 80% by weight and most preferably 40 to 80% by weight of the margarine or fatty spread.

The margarines or fatty spreads may also include 0 to 58% by weight, preferably 22 to 38% by weight and most preferably 15 to 20% by weight of water. The margarines or fatty spreads may also contain 0.1 to 3% by weight, preferably 0.5 to 3% by weight and most preferably 0.75 to 2% by weight of dairy solids. Dairy solids include, for example, whey, non-fat dry milk, casein and mixtures thereof.

Synthetic sour creams suitable for use in the present invention suitably comprise 10 to 28% by weight, preferably 14 to 25% by weight and most preferably 15 to 20% by weight of fat. In order to thicken sour creams so that they constitute plastic or semi-plastic materials, gums such as carragheenan, alginates, xanthan gum, guar gum, locust bean gum, carboxymethylcellulose and the like may also be added. A suitable amount of gums includes 0.05 to 1.0% by weight, preferably 0.1 to 0.75% by weight and most preferably 0.30 to 0.5% by weight.

Synthetic cream cheese suitable for use as the matrix in the present invention will generally comprise 20 to 40% by weight, preferably 25 to 35% by weight and most preferably 33 to 35% by weight of fat. Some optional ingredients suitable for use in synthetic cream cheeses include guar gum and an emulsifier such as mono-diglyceride.

Synthetic cheese spread matrices will generally comprise 10 to 40% by weight, preferably 15 to 30% by weight and most preferably 18 to 20% by weight of fat. Some optional ingredients suitable for use in

4

synthetic cheese spreads include cheese whey solids, disodium phosphate, xanthan gum and sorbic acid.

In addition to fat, the matrix may contain one or more optional ingredients. Such optional ingredients include, for example, water and dairy solids. Dairy solids include, for example, whey, non-fat dry milk, casein and mixtures thereof. Colouring agents, flavouring agents, preservatives, antioxidants, salt and the like may also be present. The same colouring agents, flavouring agents, preservatives and antioxidants suitable for use in the particles are also suitable for use in the matrix of the claimed compositions.

The presently disclosed compositions are plastic or semi-plastic and comprise discrete particles in a matrix. For the purposes of this specification, plastic and semi-plastic compositions are those solid compositions which under the action of external forces undergo permanent deformation without rupture.

The plastic or semi-plastic compositions contemplated are those which are normally spread on foods with a knife or are added to foods with a spoon. Some suitable examples include bar and tub margarines, butter, cream cheese, sour cream, cheese spreads, spoonable salad dressings, mayonnaise and the like.

Generally, the components used in the particles will be related in some way to the components used in the matrix. Thus, some preferred compositions include butter in margarine, sour cream in synthetic sour cream, cream cheese in synthetic cream cheese and various other cheeses in cheese spreads. Each composition will have characteristic proportions of components and particle sizes.

The preferred compositions comprise particles of butter in margarine. Suitable amounts of butter particles in margarine include 0.1 to 80% by weight, preferably 2 to 60% by weight and most preferably 5 to 40% by weight. Some suitable particle sizes of the butter include 0.04 to 4.8 mm, preferably 0.07 to 2.4 mm and most preferably 0.18 to 1.0 mm.

Sour cream in synthetic sour cream compositions will generally contain 0.1 to 80% by weight, preferably 2 to 60% by weight and most preferably 5 to 40% by weight of sour cream particles. Some suitable sour cream particle sizes include 0.04 to 4.8 mm, preferably 0.07 to 2.4 mm and most preferably 0.18 to 1.0 mm. The sour cream particles will generally contain 10 to 28% by weight, preferably 14 to 25% by weight and most preferably 15 to 20% by weight of fat.

Cream cheese in synthetic cream cheese compositions will generally contain 0.1 to 80% by weight, preferably 2 to 60% by weight and most preferably 5 to 40% by weight of cream cheese particles. Some suitable cream cheese particle sizes include 0.04 to 4.8 mm, preferably 0.07 to 2.4 mm and most preferably 0.18 to 1.0 mm. The cream cheese particles will generally contain 20 to 40% by weight, preferably 25 to 35% by weight and most preferably 33 to 35% by weight of fat.

Cheese in cheese spread compositions will generally contain 0.1 to 80% by weight, preferably 2 to 60% by weight and most preferably 5 to 40% by weight of cheese particles. Some suitable cheese particle sizes include 0.04 to 4.8 mm, preferably 0.07 to 2.4 mm and most preferably 0.10 to 1.0 mm. The cheese particles will generally contain 10 to 40% by weight, preferably 15 to 30% by weight and most preferably 18 to 22% by weight of fat.

The present invention is also directed to liquid margarine compositions which contain discrete particles of butter. In such liquid margarines, the particles comprise 0.1 to 80% by weight, preferably 2 to 60% by weight and most preferably 5 to 40% by weight of the composition. Some suitable butter particle sizes include 0.04 to 4.8 mm, preferably 0.07 to 2.4 mm and most preferably 0.18 to 1.0 mm.

In order to prepare the margarine compositions of the present invention, the size of the fat-bearing material which is to be used in the particles of the compositions must be reduced to the size desired. The size may be reduced using any of the known comminution methods and devices.

Suitable devices for reducing the particle size include the hammermill, Hobart silent cutter, Fitzpatrick comminution mill, Stephan verticle cutter, Waring blender and Littleford mill. The preferred device is the Hobart silent cutter.

The particles are preferably reduced in particle size under cryogenic conditions, generally by contacting the particles with cold carbon dioxide or nitrogen. When the particles contain 20 to 45% by weight of fat, it is preferable to reduce the size of the particles when the particles are at temperatures below about 2°C, preferably below about −18°C and most preferably below about −29°C.

When the particles contain about 40 to 85% by weight of fat, it is preferable to reduce the size of the particles when the particles are at temperatures below about −18°C, preferably less than about −23°C and most preferably less than about −40°C.

The particles may be screened by permitting the particles to pass through a standard U.S. sieve having a low mesh and collecting the particles on a sieve having a high mesh. Some suitable mesh sizes include 8 to 80 mesh, equivalent to a sieve opening size of 2.38 mm to 0.18 mm, preferably 6 to 70 mesh (sieve opening size 3.36 mm to 2.1 mm), and most preferably 4 to 60 mesh (sieve opening size 4.76 mm to 0.25 mm).

The particles are added to the margarine matrix while the margarine is in a liquid state. The particles must be incorporated in the margarine in such a manner so as not to interfere with the normal crystallization of the margarine as it solidifies during cooling. If the particles are added to the margarine after crystallization has been completed, the mixing process disrupts the crystallization of the margarine and promotes a product which is too soft.

If, on the other hand, the particles are added to the liquid margarine before it has been reduced sufficiently in temperature, the particles may melt. The melting of the particles is disadvantageous for at least two reasons. The melted particles may diffuse into the molten matrix so that the cooled composition would not contain discrete particles as desired. Moreover, the melting of particles appears to cause modifications in the crystalline structure of the particles. Thus, the properties of particles which have been altered through melting and re-cooling may be different from particles which have never been melted and are, therefore, in their natural crystalline state. One of the advantages of the present process is that the particles are added to the matrix in a cooled rather than in a heated state. Compositions which are prepared in this way benefit in having the properties and flavour of the ingredients not altered.

In order to prepare the claimed compositions, it has now been discovered that the particles are preferably added to the matrix during cooling when the matrix is in a liquid, supercooled state. The matrix is considered to be supercooled when it is at a temperature at which it normally crystallizes but, because of the rapidity with which the temperature is dropped, is still liquid. Most materials have some capacity to be supercooled. Oleaginous materials such as those used in the present compositions have a relatively large tendency to supercool. For example, butter is added to supercooled margarine when the margarine is at a temperature below about 27°C, preferably below about 18°C and most preferably below about 10°C.

The particles may be added to the supercooled matrix by any well-known method such as, for example, the use of a Fruit feeder, ribbon blender, Hobart mixer and Margarine B unit. The preferred method is the use of a Fruit feeder. A Fruit feeder® is a machine developed by Cherry-Burrell Company for injecting particulate matter into flowing plastic or semi-plastic compositions and especially into ice-cream. Injection is accomplished by means of the action of four cam-operated pistons which slide back and forth in four grooves of a revolving rotor inside a close-fitting housing. This assembly is called the fruit pump. Materials to be fed fall into the grooves of the rotor from a cylindrical hopper directly above the fruit pump. An agitator and revolving pin wheel in the hopper keep materials loose and free so that they are able to fall into the exposed rotor grooves as they come under the hopper throat. The plastic or semi-plastic matrix and charges of particulate matter flow from the fruit pump to the vertical mixing chamber where a multiblade agitator stirs the combination in order to distribute the particulate matter uniformly through the matrix. The uniform mixture discharges from the top of the mixing chamber into suitable packaging stock such as tubs, bottles, wrapping material, jars, cans and the like or to conventional print-forming machines.

After adding the particles to the matrix, the composition is cooled and further processed for use. The compositions may be packaged as such, or may be blended with other food ingredients before packaging. For example, if the composition comprises butter in margarine, the composition may be packaged in tubs or fashioned into bars.

Having generally described the invention, a more complete understanding can be obtained by reference to certain specific examples, which are provided herein for purposes of illustrations only. It is not intended that the examples limit the claims in any way unless otherwise specified.

## Example 1

Preparation of Particles of Butter

The butter used in this example was Armour Flavor-up® Color 9 butter, which is described by the following data:

| | | |
|---|---|---|
| Wiley Melting Point | | 30.8—31.8°C |
| Slip Point (Mettler) | | 32.2—32.3°C |
| SFI — | 10°C— | 30 |
| | 21°C— | 12 |
| | 33°C— | 3.2 |
| | 38°C— | — |
| Iodine number | | 37.5—42.9 |
| Saponification equiv. | | 247.7—252.8 |
| Reichert-Meissl Value | | 26.1—27.4 |
| Polenske Value | | 1.78—1.85 |
| Kirschner Value | | 21.8 |

The butter was cut in a Hobart (Model N° 84181—D) Food cutter. A convenient amount of dry ice chunks are placed in the revolving bowl of the Hobart cutter and allowed to be chopped by the rotating blades until the dry ice becomes a fine powder (approx. 2—3 min). Large pieces of butter at 4 to 6°C are then added on the bed of powdered dry ice in a ratio of 1:2—3. The butter is chopped by the rotating blades of the machine until the desired particle sizes are achieved.

In Table 1, the fractions of the butter having various standard U.S. sieve numbers from 8 to 60 (2380 micrometers—250 micrometers) are reported. Separate experiments were conducted for operating the food cutter for one minute, two minutes, three minutes, four minutes and five minutes, respectively.

TABLE 1

| Time of Chopping (minutes) | | % Butter on Sieve Sieve # | | | | | |
|---|---|---|---|---|---|---|---|
| | | | | | | Through | |
| | | 8 | 14 | 20 | 40 | 60 | 60 |
| | micrometers: | 2380 | 1410 | 840 | 420 | 250 | 250 |
| 1 | | 67.9 | 15.2 | 7.5 | 6.1 | 1.9 | .4 |
| 2 | | 43.3 | 25.2 | 14.2 | 10.0 | 5.0 | 1.4 |
| 3 | | 22.4 | 30.0 | 20.0 | 17.6 | 7.0 | 2.9 |
| 4 | | 16.2 | 31.8 | 23.2 | 18.6 | 7.2 | 2.9 |
| 5 | | 8.5 | 29.9 | 27.6 | 25.1 | 5.8 | 3.1 |

It does not appear that rigid classification of the butter is necessary if the larger particles are desired. A quick one-minute chopping of the material yields 90.6% retained on screens 8, 14 and 20. Medium size particles are easily obtained by increasing the chopping time.

Example 2

Preparation of Butter Particles

4.536 kilograms of coarse chunks of dry ice (solid $CO_2$) were placed in the bowl of a Hobart Silent Cutter® and chopped until the dry ice particles were reduced to the size of snow (chopping time — approx. 2—3 min.). 1,81 kg of butter (in chunks at 4—6°C) were then added and chopped until their particle size was reduced to the range of 0.04 to 4.8 mm (chopping time — approx. 2—3 min.).

The chopped dry ice/butter combination was then sieved through a Ro-Tap Sieving machine® for two minutes using sieve sizes ranging from #2 mesh (about 6 mm) to #60 mesh (250 mm) (Tyler) to remove particles of butter larger than #4 mesh (4.8 mm). The particles of chopped butter that had passed through the 4 mesh sieve were pooled and placed at −34°C until used for production of the final product.

Example 3

Preparation of Butter in Margarine Composition

4.536 kilograms of frozen (−23°C) chopped butter particles (0.04—4.8 mm size) were placed in the hopper of a Fruit Feeder. The Fruit Feeder was set (by adjusting variable speed drive) to inject 5% by weight of the chopped butter particles into the margarine matrix.

The margarine matrix was prepared by conventional methods by making an emulsion of fat and aqueous phase in a margarine churn, then cooling the emulsion via conventional rotators to produce the plastic margarine matrix.

The plastic margarine matrix was led to the Fruit Feeder which injected the desired amount of chopped butter into the margarine. The final product was collected in 227 g margarine tubs and placed in 7°C storage.

Example 4

Preparation of Butter in Margarine

The Armour Flavor-up Color 9 butter described in Example 1 is used in the present example.

The margarines contain the following ingredients:

7

# 0 102 656

## Print Margarine Formulation

|  | % |
|---|---|
| Oil Base stock | 79.6410 |
| Monoglyceride[a] | 0.25 |
| Lecithin | 0.22 |
| Water | 16.272 |
| Salt | 2.0 |
| Sodium benzoate | 0.1 |
| 85% lactic acid | 0.017 |
| Vitamins and colour in an oil carrier[b] | 0.003 |
| Flavour[c] | 0.025 |

[a] Emulsifier made from soybean oil hardened to an iodine value of 75 to 79 and having a 20°C dilatation value of 375 and a 20°C NMR value of 13.8.
[b] Sufficient so that 1633 kg of margarine contains 41.40 million IU Vitamin A, 19.80 million IU beta carotene and 7.92 million IU Vitamin $D_2$.
[c] IFF butter flavour number 73528621.

## Soft Margarine Formulation

|  | % |
|---|---|
| Oil Base stock | 79.5310 |
| Monoglyceride[a] | 0.36 |
| Lecithin | 0.22 |
| Water | 16.443 |
| Whey solids | 1.514 |
| Salt | 1.75 |
| Potassium sorbate | 0.05 |
| 85% lactic acid | 0.043 |
| Vitamins and colour in an oil carrier[b] | 0.030 |
| Flavour[c] | 0.059 |

[a] Cottonseed oil having an iodine value of 74 to 79, a 20°C dilatation value of 375 and a 20°C NMR value of 13.8.
[b] Sufficient so that 1633 kg of margarine contains 41.40 million IU Vitamin A, 19.80 million IU beta carotene and 7.92 million IU Vitamin $D_2$.
[c] IFF butter flavour number 73528621.

The oil base stock is prepared from 170 kg of a margarine oil and 11.8 kg of a hardstock. The margarine oil, the hardstock and the mixture of margarine oil and hardstock have solids as measured by NMR of:

| Temperature | Margarine Oil | Hardstock | Final Mixture |
|---|---|---|---|
| 0°C | 46 | 90.8 | 48.8 |
| 20°C | 17.9 | 68.8 | 20.2 |
| 36°C | 0.40 | 6.2 | 0.4 |
| 42°C | 0 | 0 | 0 |

The hardstock is prepared from 22.7 kg of cottonseed oil hardened to a refractive index of 47.1 and 340 kg of soybean oil hardened to an iodine value of 75.7.

Preparation of the Margarine

The water-soluble ingredients are dissolved in the water phase. The vitamin concentrates, flavouring materials, emulsifiers and colour are added to the oil phase. The emulsifying tanks are equipped with efficient agitators. They are first charged with the oil phase at a temperature somewhat above that desired in the emulsion (46—49°C) and the cold aqueous phase is then added with agitation to form a water-in-oil emulsion. The emulsion is then fed to a Votator which supercools the margarine.

The butter particles are dispersed in the margarine matrix in accordance with Example 3 in the proportions indicated in Table 2.

TABLE 2
Butter in Margarine Matrix

| | % Butter Particles | Particle Size (mm) | Wiley M.P. of particles °C | | % Fat in Butter | % Margarine Matrix | %Fat in margarine |
|---|---|---|---|---|---|---|---|
| A | 2.5 | 0.35—2.38 | 31 | (87.8°F) | 80.0 | 97.5 | 80.0 |
| B | 5.0 | 0.35—2.38 | 31 | (87.8°F) | 80.0 | 95.0 | 80.0 |
| C | 10.0 | 0.35—2.38 | 31 | (87.8°F) | 80.0 | 90.0 | 80.0 |
| D | 20.0 | 0.35—2.38 | 31 | (87.8°F) | 80.0 | 80.0 | 80.0 |
| E | 30.0 | 0.35—2.38 | 31 | (87.8°F) | 80.0 | 70.0 | 80.0 |
| F | 10.0 | 0.04—4.80 | 31 | (88°F) | 80.0 | 90.0 | 70.0 |
| G | 10.0 | 0.08—4.00 | 31 | (88°F) | 80.0 | 90.0 | 70.0 |
| H | 10.0 | 0.149—2.83 | 31 | (88°F) | 80.0 | 90.0 | 70.0 |
| I | 10.0 | 0.25—1.68 | 31 | (88°F) | 80.0 | 90.0 | 70.0 |
| J | 10.0 | 0.35—1.00 | 31 | (88°F) | 80.0 | 90.0 | 70.0 |
| K | 20.0 | 0.177—3.36 | 37 | (99°F) | 82.0 | 80.0 | 60.0 |
| L | 20.0 | 0.177—3.36 | 37 | (99°F) | 84.0 | 80.0 | 60.0 |
| M | 20.0 | 0.177—3.36 | 37 | (99°F) | 88.0 | 80.0 | 60.0 |
| N | 20.0 | 0.177—3.36 | 37 | (99°F) | 90.0 | 80.0 | 60.0 |
| O | 20.0 | 0.177—3.36 | 37 | (99°F) | 100.0 | 80.0 | 60.0 |
| P | 0.1 | 0.35—2.38 | 32 | (90°F) | 10.0 | 99.9 | 100.0 |
| Q | 40.0 | 0.35—2.38 | 32 | (90°F) | 40.0 | 60.0 | 20.0 |
| R | 80.0 | 0.35—2.38 | 32 | (90°F) | 60.0 | 20.0 | 10.0 |

# 0 102 656

TABLE 2 (continued)
Butter in Margarine Matrix

|  | Colour % | Flavour % | Lactic Acid % | Salt % | Whey Solids | Emulsi-fier % | Preserva-tives %, Na benzoate/K sorbate (1:1) |
|---|---|---|---|---|---|---|---|
|  |  |  |  | Optional Ingredients for Matrix | | | |
| A | 0.003 | 0.0059 | 0.04 | 2.0 | 1.5 | 0.5 | 0.05 |
| B | 0.003 | 0.0059 | 0.04 | 2.0 | 1.5 | 0.5 | 0.05 |
| C | 0.003 | 0.0059 | 0.04 | 2.0 | 1.5 | 0.5 | 0.05 |
| D | 0.003 | 0.0059 | 0.04 | 2.0 | 1.5 | 0.5 | 0.05 |
| E | 0.003 | 0.0059 | 0.04 | 2.0 | 1.5 | 0.5 | 0.05 |
| F | 0.003 | 0.0059 | 0.04 | 2.0 | 1.5 | 0.5 | 0.05 |
| G | 0.003 | 0.0059 | 0.04 | 2.0 | 1.5 | 0.5 | 0.05 |
| H | 0.003 | 0.0059 | 0.04 | 2.0 | 1.5 | 0.5 | 0.05 |
| I | 0.003 | 0.0059 | 0.04 | 2.0 | 1.5 | 0.5 | 0.05 |
| J | 0.003 | 0.0059 | 0.04 | 2.0 | 1.5 | 0.5 | 0.05 |
| K | 0.003 | 0.0059 | 0.04 | 2.0 | 1.5 | 0.5 | 0.05 |
| L | 0.003 | 0.0059 | 0.04 | 2.0 | 1.5 | 0.5 | 0.05 |
| M | 0.003 | 0.0059 | 0.04 | 2.0 | 1.5 | 0.5 | 0.05 |
| M | 0.003 | 0.0059 | 0.04 | 2.0 | 1.5 | 0.5 | 0.05 |
| O | 0.003 | 0.0059 | 0.04 | 2.0 | 1.5 | 0.5 | 0.05 |
| P | 0.003 | 0.0059 | 0.04 | 2.0 | 1.5 | 0.5 | 0.05 |
| Q | 0.003 | 0.0059 | 0.04 | 2.0 | 1.5 | 0.5 | 0.05 |
| R | 0.003 | 0.0059 | 0.04 | 2.0 | 1.5 | 0.5 | 0.05 |

## Example 5

Cream Cheese in Synthetic Cream Cheese

The synthetic cream cheese contains the following ingredients:

Vegetable Dairy Cream Cheese (Acidified)

| Ingredients | % |
|---|---|
| Sodium Caseinate | 2.0 |
| 24 D.E. Corn Syrup Solids | 7.00 |
| Salt | 0.15 |
| Stabilizer[a] | 2.40 |
| Water | 62.45 |
| DURKEE'S KAOMEL[b]® | 25.00 |
| DURKEE'S DUR-EM 117[c]® | 0.15 |
| Flavoured lactic acid | 0.85 |
| Total | 100.00 |

10

*Footnotes for Example 5:*

[a] Stabilac 3500 Base produced by Blanke-Baer Food Products Corp. (mixture of starches, gums and emulsifiers).

[b] Partially hydrogenated soybean and cottonseed oil.

[c] Mono/diglycerides with citric acid — Durkee Industrial Food Group — SCM Corp.

Procedure:

Dry mix sodium caseinate, corn syrup solids and salt with stabilizer and add to water. Mix to disperse solids. Add KAOMEL® and DUR-EM 117® and heat mixture to 79°C. Homogenize mix at 1125 kg through a single-stage homogenizer. Cool mix to 16°C and add acid slowly with light agitation. Cool to 4°C and package.

The cream cheese particles are dispersed in the synthetic cream cheese in the proportions indicated in Table 3.

TABLE 3
Cream Cheese Particles Dispersed in an Artificial Cream Cheese Matrix

| | % Cream Cheese Par- ticles | Particle Size mm | Wiley M.P. of particles °C | | % Fat in Cream Cheese | % Cream Cheese Matrix | % Fat in Cream Cheese Matrix |
|---|---|---|---|---|---|---|---|
| A | 2.5 | 0.35—2.38 | 31 | (87.8°F) | 80.0 | 97.5 | 80.0 |
| B | 5.0 | 0.35—2.38 | 31 | (87.8°F) | 80.0 | 95.0 | 80.0 |
| C | 10.0 | 0.35—2.38 | 31 | (87.8°F) | 80.0 | 90.0 | 80.0 |
| D | 20.0 | 0.35—2.38 | 31 | (87.8°F) | 80.0 | 80.0 | 80.0 |
| E | 30.0 | 0.35—2.38 | 31 | (87.8°F) | 80.0 | 70.0 | 80.0 |
| F | 10.0 | 0.04—4.80 | 31 | (88°F) | 80.0 | 90.0 | 70.0 |
| G | 10.0 | 0.08—4.00 | 31 | (88°F) | 80.0 | 90.0 | 70.0 |
| H | 10.0 | 0.149—2.83 | 31 | (88°F) | 80.0 | 90.0 | 70.0 |
| I | 10.0 | 0.25—1.68 | 31 | (88°F) | 80.0 | 90.0 | 70.0 |
| J | 10.0 | 0.35—1.00 | 31 | (88°F) | 80.0 | 90.0 | 70.0 |
| K | 20.0 | 0.177—3.36 | 37 | (99°F) | 82.0 | 80.0 | 60.0 |
| L | 20.0 | 0.177—3.36 | 37 | (99°F) | 84.0 | 80.0 | 60.0 |
| M | 20.0 | 0.177—3.36 | 37 | (99°F) | 88.0 | 80.0 | 60.0 |
| N | 20.0 | 0.177—3.36 | 37 | (99°F) | 90.0 | 80.0 | 60.0 |
| O | 20.0 | 0.177—3.36 | 37 | (99°F) | 100.0 | 80.0 | 60.0 |
| P | 0.1 | 0.35—2.38 | 32 | (90°F) | 10.0 | 99.9 | 100.0 |
| Q | 40.0 | 0.35—2.38 | 32 | (90°F) | 40.0 | 60.0 | 20.0 |
| R | 80.0 | 0.35—2.38 | 32 | (90°F) | 60.0 | 20.0 | 10.0 |

TABLE 3 (continued)
Cream Cheese Particles Dispersed in an Artificial Cream Cheese Matrix

| | Optional Ingredients % for Matrix | | | | |
| | Stabilizer Guar Gum | Non-fat Milk Solids | Emulsi-fier | Flavour | Salt |
|---|---|---|---|---|---|
| A | 0.45 | 10.0 | 0.5 | 0.1 | 0.5 |
| B | 0.45 | 10.0 | 0.5 | 0.1 | 0.5 |
| C | 0.45 | 10.0 | 0.5 | 0.1 | 0.5 |
| D | 0.45 | 10.0 | 0.5 | 0.1 | 0.5 |
| E | 0.45 | 10.0 | 0.5 | 0.1 | 0.5 |
| F | 0.45 | 10.0 | 0.5 | 0.1 | 0.5 |
| G | 0.45 | 10.0 | 0.5 | 0.1 | 0.5 |
| H | 0.45 | 10.0 | 0.5 | 0.1 | 0.5 |
| I | 0.45 | 10.0 | 0.5 | 0.1 | 0.5 |
| J | 0.45 | 10.0 | 0.5 | 0.1 | 0.5 |
| K | 0.45 | 10.0 | 0.5 | 0.1 | 0.5 |
| L | 0.45 | 10.0 | 0.5 | 0.1 | 0.5 |
| M | 0.45 | 10.0 | 0.5 | 0.1 | 0.5 |
| N | 0.45 | 10.0 | 0.5 | 0.1 | 0.5 |
| O | 0.45 | 10.0 | 0.5 | 0.1 | 0.5 |
| P | 0.45 | 10.0 | 0.5 | 0.1 | 0.5 |
| Q | 0.45 | 10.0 | 0.5 | 0.1 | 0.5 |
| R | 0.45 | 10.0 | 0.5 | 0.1 | 0.5 |

Example 6
Example of Thickening Sour Cream to Obtain Particles Which Will Hold Their Shape

45.4 g of Breakstone's cultured sour cream was placed in a Waring Blender jar and agitated at high speed. One percent by weight (4.54 g) of xanthan gum (Keltral-Kelco Co.) was then added directly to the sour cream with vigorous agitation. After two minutes, a thickened sour cream matrix had formed which was plastic at 7°C. The thickened sour cream was then frozen at −23°C and chopped and sieved in the same manner as used for the butter.

# 0 102 656

Example 7

Sour Cream in Synthetic Sour Cream

The following formula shown illustrates a sour dressing that is to be cultured.

Synthetic Sour Cream Sour Dressing (Cultured)

| Ingredients | % |
| --- | --- |
| Non-fat Milk Solids | 9.0 |
| DURKEE'S SOUR CREAM ENHANCER #487[a] | 0.10 |
| Guar gum | 0.4 |
| Water | 72.0 + |
| DURKEE'S KAOMEL[b] | 18.00 |
| DURKEE'S DUR-EM 117[c] | 0.50 |
| Total | 100.00 |

[a] Flavour of Durkee Division of SCM Corporation.
[b] Partially hydrogenated soybean and cottonseed oil.
[c] Mono/diglycerides with citric acid — Durkee Industrial Food Group — SCM Corp.

Procedure:

Dissolve non-fat milk solids, SOUR CREAM ENHANCER and stabilizer in cool water. Mix well to dissolve solids. Heat to 43°C and add DUR-EM 117 and KAOMEL. Pasteurize at 74°C for 20 to 30 minutes. Homogenize mix at 907 and 227 kg through a two-stage homogenizer. Cool mix to 18°C and add 2% to 5% culture. Incubate at 22°C until desired acidity is obtained. Cool to 4°C and package.

The sour cream particles are dispersed in the synthetic sour cream in the proportions indicated in Table 4 according to the same procedure as Example 3.

13

TABLE 4
Sour Cream Particles Dispersed in an Artificial Sour Cream Matrix

| | % Cream Cheese Particles | Particle Size mm | Wiley M.P. of particles °C | | % Fat in Sour Cream | % Sour Cream Matrix | % Fat in Sour Cream Matrix |
|---|---|---|---|---|---|---|---|
| A | 2.5 | 0.35—2.38 | 31 | (87.8°F) | 80.0 | 97.5 | 80.0 |
| B | 5.0 | 0.35—2.38 | 31 | (87.8°F) | 80.0 | 95.0 | 80.0 |
| C | 10.0 | 0.35—2.38 | 31 | (87.8°F) | 80.0 | 90.0 | 80.0 |
| D | 20.0 | 0.35—2.38 | 31 | (87.8°F) | 80.0 | 80.0 | 80.0 |
| E | 30.0 | 0.35—2.38 | 31 | (87.8°F) | 80.0 | 70.0 | 80.0 |
| F | 10.0 | 0.04—4.80 | 31 | (88°F) | 80.0 | 90.0 | 70.0 |
| G | 10.0 | 0.08—4.00 | 31 | (88°F) | 80.0 | 90.0 | 70.0 |
| H | 10.0 | 0.149—2.83 | 31 | (88°F) | 80.0 | 90.0 | 70.0 |
| I | 10.0 | 0.25—1.68 | 31 | (88°F) | 80.0 | 90.0 | 70.0 |
| J | 10.0 | 0.35—1.00 | 31 | (88°F) | 80.0 | 90.0 | 70.0 |
| K | 20.0 | 0.177—3.36 | 37 | (99°F) | 82.0 | 80.0 | 60.0 |
| L | 20.0 | 0.177—3.36 | 37 | (99°F) | 84.0 | 80.0 | 60.0 |
| M | 20.0 | 0.177—3.36 | 37 | (99°F) | 88.0 | 80.0 | 60.0 |
| N | 20.0 | 0.177—3.36 | 37 | (99°F) | 90.0 | 80.0 | 60.0 |
| O | 20.0 | 0.177—3.36 | 37 | (99°F) | 100.0 | 80.0 | 60.0 |
| P | 0.1 | 0.35—2.38 | 32 | (90°F) | 10.0 | 99.9 | 100.0 |
| Q | 40.0 | 0.35—2.38 | 32 | (90°F) | 40.0 | 60.0 | 20.0 |
| R | 80.0 | 0.35—2.38 | 32 | (90°F) | 60.0 | 20.0 | 10.0 |

TABLE 4 (continued)
Sour Cream Particles Dispersed in an Artificial Sour Cream Matrix

| | Optional Ingredients % for Matrix | | | |
| --- | --- | --- | --- | --- |
| | Stabilizer Guar Gum | Non-fat Milk Solids | Emulsi- fier | Flavour |
| A | 0.4 | 9.0 | 0.5 | 0.1 |
| B | 0.4 | 9.0 | 0.5 | 0.1 |
| C | 0.4 | 9.0 | 0.5 | 0.1 |
| D | 0.4 | 9.0 | 0.5 | 0.1 |
| E | 0.4 | 9.0 | 0.5 | 0.1 |
| F | 0.4 | 9.0 | 0.5 | 0.1 |
| G | 0.4 | 9.0 | 0.5 | 0.1 |
| H | 0.4 | 9.0 | 0.5 | 0.1 |
| I | 0.4 | 9.0 | 0.5 | 0.1 |
| J | 0.4 | 9.0 | 0.5 | 0.1 |
| K | 0.4 | 9.0 | 0.5 | 0.1 |
| L | 0.4 | 9.0 | 0.5 | 0.1 |
| M | 0.4 | 9.0 | 0.5 | 0.1 |
| N | 0.4 | 9.0 | 0.5 | 0.1 |
| O | 0.4 | 9.0 | 0.5 | 0.1 |
| P | 0.4 | 9.0 | 0.5 | 0.1 |
| Q | 0.4 | 9.0 | 0.5 | 0.1 |
| R | 0.4 | 9.0 | 0.5 | 0.1 |

Example 8

Cheese in Cheese Spread

The cheeses of this example are natural Colby cheese, Edam cheese, Swiss cheese, Cheddar cheese and Gouda cheese.

The cheese particles are dispersed in the cheese spread matrix in the proportions indicated in Table 5.

TABLE 5
Cheese Particles Dispersed in a Cheese Spread Matrix

| | % Cheese Particles | Particle Size mm | Wiley M.P. of particles °C | | % Fat in Cheese | % Cheese Matrix | % Fat in Cheese Matrix |
|---|---|---|---|---|---|---|---|
| A | 2.5[a] | 0.35—2.38 | 31 | (87.8°F) | 80.0 | 97.5 | 80.0 |
| B | 5.0[b] | 0.35—2.38 | 31 | (87.8°-F) | 80.0 | 95.0 | 80.0 |
| C | 10.0[c] | 0.35—2.38 | 31 | (87.8°F) | 80.0 | 90.0 | 80.0 |
| D | 20.0[d] | 0.35—2.38 | 31 | (87.8°F) | 80.0 | 80.0 | 80.0 |
| E | 30.0[e] | 0.35—2.38 | 31 | (87.8°F) | 80.0 | 70.0 | 80.0 |
| F | 10.0[a] | 0.04—4.80 | 31 | (88°F) | 80.0 | 90.0 | 70.0 |
| G | 10.0[b] | 0.08—4.00 | 31 | (88°F) | 80.0 | 90.0 | 70.0 |
| H | 10.0[c] | 0.149—2.83 | 31 | (88°F) | 80.0 | 90.0 | 70.0 |
| I | 10.0[d] | 0.25—1.68 | 31 | (88°F) | 80.0 | 90.0 | 70.0 |
| J | 10.0[e] | 0.35—1.00 | 31 | (88°F) | 80.0 | 90.0 | 70.0 |
| K | 20.0[a] | 0.177—3.36 | 37 | (99°F) | 82.0 | 80.0 | 60.0 |
| L | 20.0[b] | 0.177—3.36 | 37 | (99°F) | 84.0 | 80.0 | 60.0 |
| M | 20.0[c] | 0.177—3.36 | 37 | (99°F) | 88.0 | 80.0 | 60.0 |
| N | 20.0[d] | 0.177—3.36 | 37 | (99°F) | 90.0 | 80.0 | 60.0 |
| O | 20.0[e] | 0.177—3.36 | 37 | (99°F) | 100.0 | 80.0 | 60.0 |
| P | 0.1[a] | 0.35—2.38 | 32 | (90°F) | 10.0 | 99.9 | 100.0 |
| Q | 40.0[b] | 0.35—2.38 | 32 | (90°F) | 40.0 | 60.0 | 20.0 |
| R· | 80.0[c] | 0.35—2.38 | 32 | (90°F) | 60.0 | 20.0 | 10.0 |

[a] Colby cheese
[b] Edam cheese
[c] Swiss cheese
[d] Cheddar cheese
[e] Gouda cheese

TABLE 5 (continued)
Cheese Particles Dispersed in a Cheese Spread Matrix

| | | Optional Ingredients % for Matrix | | | | | | |
|---|---|---|---|---|---|---|---|---|
| | Cheese Whey Solids | Non-Fat Milk Solids | Di-sodium phos-phate | Salt | Xan-than gum | Sorbic Acid | Colour-ing | Flavour-ing |
| A | 10.0 | 6.5 | 2.0 | 1.5 | 0.3 | 0.2 | 0.1 | 0.1 |
| B | 10.0 | 6.5 | 2.0 | 1.5 | 0.3 | 0.2 | 0.1 | 0.1 |
| C | 10.0 | 6.5 | 2.0 | 1.5 | 0.3 | 0.2 | 0.1 | 0.1 |
| D | 10.0 | 6.5 | 2.0 | 1.5 | 0.3 | 0.2 | 0.1 | 0.1 |
| E | 10.0 | 6.5 | 2.0 | 1.5 | 0.3 | 0.2 | 0.1 | 0.1 |
| F | 10.0 | 6.5 | 2.0 | 1.5 | 0.3 | 0.2 | 0.1 | 0.1 |
| G | 10.0 | 6.5 | 2.0 | 1.5 | 0.3 | 0.2 | 0.1 | 0.1 |
| H | 10.0 | 6.5 | 2.0 | 1.5 | 0.3 | 0.2 | 0.1 | 0.1 |
| I | 10.0 | 6.5 | 2.0 | 1.5 | 0.3 | 0.2 | 0.1 | 0.1 |
| J | 10.0 | 6.5 | 2.0 | 1.5 | 0.3 | 0.2 | 0.1 | 0.1 |
| K | 10.0 | 6.5 | 2.0 | 1.5 | 0.3 | 0.2 | 0.1 | 0.1 |
| L | 10.0 | 6.5 | 2.0 | 1.5 | 0.3 | 0.2 | 0.1 | 0.1 |
| M | 10.0 | 6.5 | 2.0 | 1.5 | 0.3 | 0.2 | 0.1 | 0.1 |
| N | 10.0 | 6.5 | 2.0 | 1.5 | 0.3 | 0.2 | 0.1 | 0.1 |
| O | 10.0 | 6.5 | 2.0 | 1.5 | 0.3 | 0.2 | 0.1 | 0.1 |
| P | 10.0 | 6.5 | 2.0 | 1.5 | 0.3 | 0.2 | 0.1 | 0.1 |
| Q | 10.0 | 6.5 | 2.0 | 1.5 | 0.3 | 0.2 | 0.1 | 0.1 |
| R | 10.0 | 6.5 | 2.0 | 1.5 | 0.3 | 0.2 | 0.1 | 0.1 |

**Claims**

1. An edible, non-pourable plastic or semi-plastic composition comprising 0.1 to 80% by weight of discrete, fat-bearing, plastic, semi-plastic or liquid particles dispersed in a fat-bearing plastic or semi-plastic matrix, said matrix and said particles each comprising 10 to 100% by weight of fat, said particles having a size of about 0.04 mm to 4.8 mm and a Wiley melting point less than 38°C.

2. An edible non-pourable composition according to claim 1 wherein the particles are plastic or semi-plastic.

3. An edible non-pourable composition according to claim 2 wherein the plastic or semi-plastic particles are in their natural crystalline state.

4. An edible composition comprising 0.1 to 80% by weight of discrete plastic, semi-plastic or liquid particles of butter dispersed in margarine, wherein said particles containing not less than 80% by weight of fat, have a size ranging from 0.04 to 4.8 mm and have a Wiley melting point of less than 38°C.

5. An edible composition comprising 0.1 to 80% by weight of discrete plastic, semi-plastic or liquid particles of sour cream having a size of 0.04 to 4.8 mm, a Wiley melting point of less than 38°C and a level of fat ranging from 10 to 28% by weight of fat, dispersed in a plastic or semi-plastic synthetic sour cream matrix.

6. An edible composition comprising 0.1 to 80% by weight of discrete plastic, semi-plastic or liquid particles of cream cheese having a size of 0.04 to 4.8 mm, a Wiley melting point of less than 38°C and a level of fat ranging from 10 to 40% by weight, dispersed in a plastic or semi-plastic synthetic cream cheese matrix.

7. An edible composition comprising 0.1 to 80% by weight of discrete plastic, semi-plastic or liquid particles of cheese having a size of 0.04 to 4.8 mm, a Wiley melting point of less than 38°C and a level of fat ranging from 10 to 40% by weight, dispersed in a plastic or semi-plastic cheese spread.

8. The edible composition according to claim 1 wherein the composition comprises 2 to 60% by weight of the particles.

9. The edible composition according to claim 1 wherein the composition comprises 5 to 40% by weight of the particles.

10. The edible composition according to claim 4 wherein the composition comprises 2 to 60% by weight of the particles.

11. The edible composition according to claim 4 wherein the composition comprises 5 to 40% by weight of the particles.

12. The edible composition according to claim 5 wherein the composition comprises 2 to 60% by weight of the particles.

13. The edible composition according to claim 5 wherein the composition comprises 5 to 40% by weight of the particles.

14. The edible composition according to claim 6 wherein the composition comprises 2 to 60% by weight of the particles.

15. The edible composition according to claim 6 wherein the composition comprises 5 to 40% by weight of the particles.

16. The edible composition according to claim 7 wherein the composition comprises 2 to 60% by weight of the particles.

17. The edible composition according to claim 7 wherein the composition comprises 5 to 40% by weight of the particles.

18. The edible composition according to claim 1 wherein the particles contain 30 to 97.5% by weight of the fat.

19. The edible composition according to claim 1 wherein the particles contain 65 to 85% by weight of the fat.

20. The edible composition according to claim 1 wherein the particles further comprise up to 90% by weight of water.

21. The edible composition according to claim 1, 4, 5, 6 or 7 wherein the particles have sizes of 0.07 to 2.4 mm.

22. The edible composition according to claim 1, 4, 5, 6 or 7 wherein the particles have sizes of 0.18 to 1.0 mm.

23. The edible composition according to claim 1, 4, 5, 6 or 7 wherein the particles consist essentially of natural materials.

24. A method for preparing a composition comprising discrete particles containing 10 to 100% by weight of fat and having a particle size of 0.04 to 4.8 mm in a margarine, comprising the steps of introducing 0.1 to 80% by weight of said particles into said matrix at a temperature below the melting point of the particles while the matrix is in a liquid supercooled state; and cooling the composition.

25. The method of claim 24 wherein the discrete particles are in their natural crystalline state.

26. The method of claim 24 wherein said discrete particles are made by reducing the size of particles containing 20 to 45% by weight of fat to the desired size at temperatures below 2°C.

27. The method of claim 26 wherein the temperature is below −18°C.

28. The method of claim 26 wherein the temperature is below −29°C.

29. The method of claim 24 wherein said discrete particles are made by reducing the size of particles containing 40 to 85% by weight of fat to the desired size at temperatures below −18°C.

30. The method of claim 29 wherein the temperature is below −23°C.

31. The method of claim 29 wherein the temperature is below −4°C.

32. The method of claim 24 wherein the particles comprise butter and the butter is added to the margarine at temperatures below about 27°C.

33. An edible, liquid composition comprising 0.1 to 80% by weight of discrete particles of butter having a Wiley melting point less than 38°C and a particle size of 0.04 to 4.8 mm in a liquid margarine.

**Patentansprüche**

1. Eßbare, nicht gießbare plastische oder halbplastische Zusammensetzung, dadurch gekennzeichnet, daß sie 0,1 bis 80 Gew.-% diskreter, fett-tragender plastischer, halbplastischer oder flüssiger Teilchen enthält, die in einer fett-tragenden plastischen oder halbplastischen Matrix dispergiert sind, wobei die Matrix und die Teilchen, jeweils einzeln, 10 bis 100 Gew.-% Fett enthalten und die Teilchen eine Größe von etwa 0,04 mm bis 4,8 mm und einen Wiley-Schmelzpunkt von weniger als 38°C aufweisen.

2. Eßbare, nicht gießbare Zusammensetzung nach Anspruch 1, dadurch gekennzeichnet, daß die Teilchen plastisch oder halbplastisch sind.

3. Eßbare, nicht gießbare Zusammensetzung nach Anspruch 2, dadurch gekennzeichnet, daß sich die plastischen oder halbplastischen Teilchen in ihrem natülichen kristallinen Zustand befinden.

4. Eßbare Zusammensetzung, dadurch gekennzeichnet, daß sie 0,1 bis 80 Gew.-% diskreter plastischer, halbplastischer oder flüssiger Butterteilchen enthält, die in Margarine dispergiert sind, wobei die Teilchen nicht weniger als 80 Gew.-% Fett enthalten, eine Größe von 0,04 bis 4,8 mm und einen Wiley-Schmelzpunkt von weniger als 38°C aufweisen.

5. Eßbare Zusammensetzung, dadurch gekennzeichnet, daß sie 0,1 bis 80 Gew.-% diskreter plastischer, halbplastischer oder flüssiger Sauerrahmteilchen einer Größe von 0,04 bis 4,8 mm, eines Wiley-Schmelzpunktes von weniger als 38°C und einen Fettanteil von 10 bis 28 Gew.-%, dispergiert in einer plastischen oder halplastischen synthetischen Sauerrahmmatrix, aufweist.

6. Eßbare Zusammensetzung, dadurch gekennzeichnet, daß sie 0,1 bis 80 Gew.-% diskreter plastischer, halbplastischer oder flüssiger Schmelzkäseteilchen einer Größe von 0,04 bis 4,8 mm und eines Wiley-Schmelzpunktes von weniger als 38°C enthält und einen Fettanteil von 10 bis 40 Gew.-%, dispergiert in einer plastischen oder halplastischen synthetischen Schmelzkäsematrix, aufweist.

7. Eßbare Zusammensetzung, dadurch gekennzeichnet, daß sie 0,1 bis 80 Gew.-% diskreter plastischer, halbplastischer oder flüssiger Käseteilchen einer Größe von 0,04 bis 4,8 mm und eines Wiley-Schmelzpunktes von weniger als 38°C enthält und einen Fettanteil von 10 bis 40 Gew.-%, dispergiert in einem plastischen oder halbplastischen Käsebrotaufstrich aufweist.

8. Eßbare Zusammensetzung nach Anspruch 1, dadurch gekennzeichnet, daß sie 2 bis 60 Gew.-% der Teilchen enthält.

9. Eßbare Zusammensetzung nach Anspruch 1, dadurch gekennzeichnet, daß sie 5 bis 40 Gew.-% der Teilchen enthält.

10. Eßbare Zusammensetzung nach Anspruch 4, dadurch gekennzeichnet, daß sie 2 bis 60 Gew.-% der Teilchen enthält.

11. Eßbare Zusammensetzung nach Anspruch 4, dadurch gekennzeichnet, daß sie 5 bis 40 Gew.-% der Teilchen enthält.

12. Eßbare Zusammensetzung nach Anspruch 5, dadurch gekennzeichnet, daß sie 2 bis 60 Gew.-% der Teilchen enthält.

13. Eßbare Zusammensetzung nach Anspruch 5, dadurch gekennzeichnet, daß sie 5 bis 40 Gew.-% der Teilchen enthält.

14. Eßbare Zusammensetzung nach Anspruch 6, dadurch gekennzeichnet, daß sie 2 bis 60 Gew.-% der Teilchen enthält.

15. Eßbare Zusammensetzung nach Anspruch 6, dadurch gekennzeichnet, daß sie 5 bis 40 Gew.-% der Teilchen enthält.

16. Eßbare Zusammensetzung nach Anspruch 7, dadurch gekennzeichnet, daß sie 2 bis 60 Gew.-% der Teilchen enthält.

17. Eßbare Zusammensetzung nach Anspruch 7, dadurch gekennzeichnet, daß sie 5 bis 40 Gew.-% der Teilchen enthält.

18. Eßbare Zusammensetzung nach Anspruch 1, dadurch gekennzeichnet, daß die Teilchen 30 bis 97,5 Gew.-% Fett enthälten.

19. Eßbare Zusammensetzung nach Anspruch 1, dadurch gekennzeichnet, daß die Teilchen 65 bis 85 Gew.-% Fett enthälten.

20. Eßbare Zusammensetzung nach Anspruch 1, dadurch gekennzeichnet, daß die Teilchen des weiteren bis zu 90 Gew.-% Wasser enthalten.

21. Eßbare Zusammensetzung nach den Ansprüchen 1, 4, 5, 6 oder 7, dadurch gekennzeichnet, daß die Teilchen Größen von 0,07 bis 2,4 mm aufweisen.

22. Eßbare Zusammensetzung nach den Ansprüchen 1, 4, 5, 6 oder 7, dadurch gekennzeichnet, daß die Teilchen Größen von 0,18 bis 1,0 mm aufweisen.

23. Eßbare Zusammensetzung nach den Ansprüchen 1, 4, 5, 6 oder 7, dadurch gekennzeichnet, daß die Teilchen im wesentlichen aus natürlichen Materialien bestehen.

24. Verfahren zur Herstellung einer Zusammensetzung, die diskrete Teilchen in einer Margarine enthält, die 10 bis 100 Gew.-% Fett enthalten und eine Teilchengröße von 0,04 bis 4,8 mm aufweisen, gekennzeichnet durch die Maßnahmen der Einverleibung von 0,1 bis 80 Gew.-% der Teilchen in die Matrix bei einer Temperatur unterhalb des Schmelzpunktes der Teilchen, während sich die Matrix in einem flüssigen untergekühlten Zustand befindet, und des Kühlens der Zusammensetzung.

25. Verfahren nach Anspruch 24, dadurch gekennzeichnet, daß die diskreten Teilchen in ihrem natürlichen kristallinen Zustand vorliegen.

26. Verfahren nach Anspruch 24, dadurch gekennzeichnet, daß die diskreten Teilchen durch Herabsetzung der Größe der 20 bis 45 Gew.-% Fett enthaltenden Teilchen auf die gewünschte Größe bei Temperaturen unterhalb 2°C hergestellt werden.

27. Verfahren nach Anspruch 26, dadurch gekennzeichnet, daß die Temperatur unter −18°C liegt.

28. Verfahren nach Anspruch 26, dadurch gekennzeichnet, daß die Temperatur unter −29°C liegt.

29. Verfahren nach Anspruch 24, dadurch gekennzeichnet, daß die diskreten Teilchen durch

19

**0 102 656**

Herabsetzung der Größe der 40 bis 85 Gew.-% Fett enthaltenden Teilchen auf die gewünschte Größe bei Temperaturen unter −18°C hergestellt werden.

30. Verfahren nach Anspruch 29, dadurch gekennzeichnet, daß die Temperatur unter −23°C liegt.

31. Verfahren nach Anspruch 29, dadurch gekennzeichnet, daß die Temperatur unter −4°C liegt.

32. Verfahren nach Anspruch 24, dadurch gekennzeichnet, daß die Teilchen Butter enthalten und die Butter bei Temperaturen unter etwa 27°C zu der Margarine gegeben wird.

33. Eßbare flüssige Zusammensetzung, dadurch gekennzeichnet, daß sie 0,1 bis 80 Gew.-% diskreter Butterteilchen eines Wiley-Schmelzpunktes von weniger als 38°C und einer Teilchengröße von 0,04 bis 4,8 mm in einer flüssigen Margarine enthält.

**Revendications**

1. Composition plastique ou semi-plastique non versable comestible comprenant de 0,1 à 80% en poids de particules discontinues, à base de graisse, plastiques, semi-plastiques ou liquides dispersées dans une matrice plastique ou semi-plastique à base de graisse, ladite matrice et lesdites particules comprenant l'une comme les autres de 10 à 100% en poids de graisse, lesdites particules ayant une taille d'environ 0,04 mm à 4,8 mm et un point de fusion de Wiley inférieur à 38°C.

2. Composition comestible non versable selon la revendication 1 où les particules sont plastiques ou semi-plastiques.

3. Composition comestible non versable selon la revendication 2 où les particules plastiques ou semi-plastiques sont dans leur état cristallin naturel.

4. Composition comestible comprenant de 0,1 à 80% en poids de particules discontinues plastiques, semi-plastiques ou liquides de beurre dispersées dans la margarine, où lesdites particules contenant au moins 80% en poids de graisse, ont une taille allant de 0,04 à 4,8 mm et ont un point de fusion de Wiley inférieur à 38°C.

5. Composition comestible comprenant de 0,1 à 80% en poids de particules discontinues plastiques, semi-plastiques ou liquides de crème fraîche ayant une taille de 0,04 à 4,8 mm, un point de fusion de Wiley inférieur à 38°C et un niveau de graisse allant de 10 à 28% en poids de graisse, dispersée dans une matrice de crème fraîche synthétique plastique ou semi-plastique.

6. Composition comestible comprenant de 0,1 à 80% en poids de particules discontinues plastiques, semi-plastiques ou liquides de fromage blanc ayant une taille de 0,04 à 4,8 mm, un point de fusion de Wiley inférieur à 38°C et un niveau de graisse allant de 10 à 40% en poids, dispersée dans une matrice de fromage blanc synthétique plastique ou semi-plastique.

7. Composition comestible comprenant de 0,1 à 80% en poids de particules discontinues plastiques, semi-plastiques ou liquides de fromage ayant une taille de 0,04 à 4,8 mm, un point de fusion de Wiley inférieur à 38°C et un niveau de graisse allant de 10 à 40% en poids, dispersée dans un fromage à tartiner plastique ou semi-plastique.

8. Composition comestible selon la revendication 1 où la composition comprend de 2 à 60% en poids de particules.

9. Composition comestible selon la revendication 1 où la composition comprend de 5 à 40% en poids de particules.

10. Composition comestible selon la revendication 4 où la composition comprend de 2 à 60% en poids de particules.

11. Composition comestible selon la revendication 4 où la composition comprend de 5 à 40% en poids de particules.

12. Composition comestible selon la revendication 5 où la composition comprend de 2 à 60% en poids de particules.

13. Composition comestible selon la revendication 5 où la composition comprend de 5 à 40% en poids de particules.

14. Composition comestible selon la revendication 6 où la composition comprend de 2 à 60% en poids de particules.

15. Composition comestible selon la revendication 6 où la composition comprend de 5 à 40% en poids de particules.

16. Composition comestible selon la revendication 7 où la composition comprend de 2 à 60% en poids de particules.

17. Composition comestible selon la revendication 7 où la composition comprend de 5 à 40% en poids de particules.

18. Composition comestible selon la revendication 1 où les particules contiennent de 30 à 97,5% en poids de graisse.

19. Composition comestible selon la revendication 1 où les particules contiennent de 65 à 85% en poids de graisse.

20. Composition comestible selon la revendication 1 où les particules contiennent en outre jusqu'à 90% en poids d'eau.

21. Composition comestible selon les revendications 1, 4, 5, 6 et 7 où les particules ont des tailles de 0,07 à 2,4 mm.

20

22. Composition comestible selon les revendications 1, 4, 5, 6 et 7 où les particules ont des tailles allant de 0,18 à 1,0 mm.

23. Composition comestible selon les revendications 1, 4, 5, 6 et 7 où les particules consistent essentiellement en matières naturelles.

24. Procédé de préparation d'une composition comprenant des particules discontinues contenant de 10 à 100% en poids de graisse et ayant une taille particulaire de 0,04 à 4,8 mm dans une margarine, comprenant les étapes d'introduction de 0,1 à 80% en poids desdites particules dans ladite matrice à une température inférieure au point de fusion des particules tandis que la matrice est dans un état de surfusion liquide; et de refroidissement de la composition.

25. Procédé de la revendication 24 où les particules discontinues sont dans leur état cristallin naturel.

26. Procédé de la revendication 24 où lesdites particules discontinues sont préparées en réduisant la taille des particules contenant de 20 à 45% en poids de graisse à la taille désirée à des températures inférieures à 2°C.

27. Procédé de la revendication 26 où la température est inférieure à −18°C.

28. Procédé de la revendication 26 où la température est inférieure à −29°C.

29. Procédé de la revendication 24 où lesdites particules discontinues sont préparées en réduisant la taille des particules contenant de 40 à 85% en poids de graisse à la taille désirée à des températures inférieures à −18°C.

30. Procédé de la revendication 29 où la température est inférieure à −23°C.

31. Procédé de la revendication 29 où la température est inférieure à −4°C.

32. Procédé de la revendication 24 où les particules comprennent du beurre et où l'on ajoute le beurre à la margarine à des températures inférieures à environ 27°C.

33. Composition liquide comestible comprenant de 0,1 à 80% en poids de particules discontinues de beurre ayant un point de fusion de Wiley inférieur à 38°C et une taille particulaire de 0,04 à 4,8 mm dans une margarine liquide.

21